# EUROPEAN PATENT SPECIFICATION

(11) **EP 2 440 060 B1**
(45) Date of publication and mention of the grant of the patent: **17.02.2016**
(21) Application number: 10786567.7
(22) Date of filing: 25.05.2010
(51) Int. Cl.: A01N 25/04, A01N 25/30, A01N 57/10, A01N 57/14, A01P 3/00

(54) **FUNGICIDAL COMPOSITION COMPRISING TOLCLOFOS-METHYL**
FUNGIZIDE ZUSAMMENSETZUNG ENTHALTEND TOLCLOFOS-METHYL
COMPOSITION FONGICIDE COMPRENANT TOLCLOFOS-METHYL

(30) Priority: 08.06.2009 US 184983 P
(43) Date of publication of application: 18.04.2012
(73) Proprietor: Sumitomo Chemical Company, Limited, Tokyo 104-8260 (JP)
(72) Inventor: TSUDA, Naoki, Toyonaka-shi Osaka 561-0802 (JP); SEITZ, Michael E., Reno, Nevada 89521 (US)
(74) Representative: Vossius & Partner Patentanwälte Rechtsanwälte mbB
(86) International application number: PCT/US2010/036002
(87) International publication number: WO 2010/144243

(56) References cited:
- EP-A1- 0 145 141
- WO-A2-2006/035316
- US-A1- 2008 009 415
- US-A1- 2009 137 667

## Description

### Field of the Invention

The present invention relates to a fungicidal composition comprising tolclofos-methyl as an active ingredient.

### Background Arts

Tolclofos-methyl is a fungicidal compound and it is known in The Pesticide Manual 13th Edition, p.979-980 published by British Crop Protection Council.

Aqueous suspension formulations containing tolcfofos-methyl are provided in the market and applied to crops (see EP-A- 0 145 141).

For seed treatment application of tolclofos-methyl, the previous formulations are not satisfactory with stability, because solid particles will agglomerate in the formulation during storage.

### Summary of the Invention

The present invention provides a fungicidal composition comprising tolclofos-methyl as an active ingredient, specifically, a fungicidal composition comprising tolclofos-methyl, polyoxyethylene polyarylphenol phosphate, polyoxyethylene polyoxypropylene block copolymer, polyoxyethylene fatty alcohol ether and water.

According to the present invention, the fungicidal composition can provide a stable suspension.

### Detailed Description of the Invention

In the present invention, tolclofos-methyl is a fungicidal ingredient, and the chemical name is O-2,6-dichloro-p-tolyl O,O-dimethyl phosphorothioate of the formula: 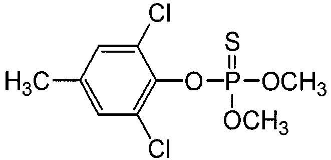 It can be obtained in the market, and it is provided by, for example, Sumitomo Chemical Company, Limited.

The content of tolclofos-methyl in the fungicidal composition of the present invention is generally 30% to 70% by weight, preferably 40% to 55% by weight.

The polyoxyethylene polyarylphenol phosphate is an anionic surfactant that is a phosphate ester acid salt of polyoxyethylenated polyarylphenol. Typical examples include salts of polyoxyethylene tristyrylphenol phosphate. Typical examples of the salt are calcium, sodium, potassium, ammonium and triethanolamine salts. Among them, potassium polyoxyethylene tristyryl phenol phosphate and triethanolamine polyoxyethylene tristyryl phenol phosphate are preferably used. These anionic surfactants are commercially available from the Stepan company of Northfield, Illinois, under the trade name 'Stepfac TSP"; and from Rhodia Incorporated of Cranbury, New Jersey, under the trade name of "Soprophor".

The content of the polyoxyethylene polyarylphenol phosphate in the fungicidal composition of the present invention is generally 0.3% to 5% by weight, preferably 1% to 5% by weight, more preferably 1% to 3% by weight. All weight percent numbers are calculated on a 100% active basis, unless otherwise indicated.

The polyoxyethylene polyoxypropylene block copolymer is also called block copolymer of ethylene oxide (EO) and propylene oxide (PO) and it is well known as a nonionic surfactant. Examples of the polyoxyethylene polyoxypropylene block copolymer are (PO)ₓ-(EO)_{y}, (EO)ₓ-(PO)_{y}, (PO)ₓ-(EO)_{y}-(PO)_{z} and (EO)ₓ-(PO)_{y}-(EO)_{z}. Among them, (PO)ₓ-(EO)_{y}-(PO)_{z}, namely 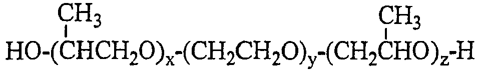 and (EO)ₓ-(PO)_{y}-(EO)_{z}, namely 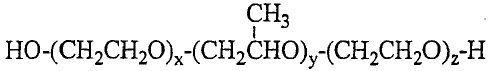 are preferably used. The average molecular weight of the block copolymer of ethylene oxide and propylene oxide is generally in the range of from 1000 to 20000. The block copolymers are commercially available from BASF Corporation of Florham Park, New Jersey, under the trade name of "Pluronic"; and from Stepan Company under the trade name of "Step-Flow".

The content of the polyoxyethylene polyoxypropylene block copolymer in the fungicidal composition of the present invention is generally 0.5% to 5% by weight, preferably 1 % to 3% by weight, more preferably 1 % to 2% by weight.

The polyoxyethylene fatty alcohol ether is a nonionic surfactant that is polyoxyalkylated fatty alcohol. It is also known as polyoxyalkylene alkyl ether and it is typically given by the formula:

R-O-(EO)ₙH,

wherein R is a higher (e.g., C10-C22) alkyl which may contain one or more carbon-carbon double bonds, in other words, R may be alkenyl, (EO)ₙ is polyoxyethylene and n is 2 to 30. It can be produced by an addition of ethylene oxide to fatty alcohol. Typical examples of the polyoxyethylene fatty alcohol ether include polyoxyethylene lauryl ether, polyoxyethylene octyl ether, polyoxyethylene myristyl ether, polyoxyethylene stearyl ether and polyoxyethylene oleyl ether. It is prepared by addition of ethylene oxide of fatty alcohol, namely C10-C22 aliphatic alcohol.

The content of the polyoxyethylene fatty alcohol ether in the fungicidal composition of the present invention is generally 0.1 % to 3% by weight, preferably 0.3% to 1.5% by weight.

The fungicidal composition optionally comprises polyvinyl alcohol. When polyvinyl alcohol is used, the content of the polyvinyl alcohol in the fungicidal composition of the present invention is generally 0.5% to 3% by weight, preferably 1 % to 2% by weight. A typical example of PVA useful in this invention is Celvol 203, a product of Celanese Corporation of Dallas, Texas. The material is also available as a 24% solution in water, called Celvol 24-203.

Further, the fungicidal composition optionally comprises auxiliaries for formulation, such as thickener, anti-freezing agent, anti-foaming agent, preservative, coloring agent and so on.

Examples of the thickener include xanthan gum, locust bean gum, aluminum magnesium silicate, carboxymethylcellulose and bentonite. When the fungicidal composition comprises the thickener, the content of the thickener in the fungicidal composition of the present invention is generally 0.07% to 1% by weight. The fungicidal composition of the present invention preferably comprises 0.07% to 0.24% by weight of xanthan gum and 0.12% to 0.4% by weight of aluminum magnesium silicate.

Examples of the anti-freezing agent include ethylene glycol, propylene glycol and glycerin. When the fungicidal composition comprises the anti-freezing agent, the content of the anti-freezing agent in the fungicidal composition of the present invention is generally 2% to 10% by weight. The fungicidal composition of the present invention preferably comprises 3% to 8% by weight of propylene glycol.

Typical examples of the anti-foaming agent are silicone emulsions and acetylenic diols. When the fungicidal composition comprises the anti-foaming agent, the content of the anti-foaming agent in the fungicidal composition of the present invention is generally 0.01% to 0.5% by weight, based on the commercial anti-foam product, as supplied by the manufacturer.

Examples of the preservative include isothiazolone preservatives and benzimidazole preservatives. When the fungicidal composition comprises the preservative, the content of the preservative in the fungicidal composition of the present invention is generally 0.01% to 0.5% by weight, based on the commercial preservative product, as supplied by the manufacturer.

Coloring agents - such as anthraquinone dyestuffs, diazo dyestuffs and pigments, are often added to either the formulation or to the final application mixture, during the seed treatment. When the fungicidal composition comprises the coloring agent, the content of the coloring agent in the fungicidal composition of the present invention is generally 0.01% to 0.5% by weight.

The content of water in the fungicidal composition of the present invention is generally 25% to 65% by weight, preferably 35% to 65% by weight, more preferably 40% to 60% by weight.

The fungicidal composition of the present invention is utilized for seed treatment. In seed treatment, seeds, tubers, seed tubers, bulbs, plant cutting and the like are treated with the fungicidal composition. Hereinafter, a term "seed" includes tuber, seed tubers, bulb, plant cutting or the like as well as seed. Examples of the seeds include corn, wheat, barley, rye, rice, sorghum and turf; and dicotyledon such as cotton, sugar beet, peanut, potato, sunflower, soybean, alfalfa, canola and the other vegetables. Further, tolclofos-methyl will be applied to transgenic plants including oat; sugarcane; tobacco; Solanaceae vegetables such as eggplant, tomato, green pepper and pepper; Cucurbitales vegetables such as cucumber, pumpkin, zucchini, watermelon, melon and squash; Brassicaceae vegetables such as radish, turnip, horseradish, kohlrabi, Chinese cabbage, cabbage, leaf mustard, broccoli and cauliflower; Compositae vegetables such as burdock, crown daisy, artichoke and lettuce; Liliaceae vegetables such as leek, onion, garlic and asparagus; Umbelliferae vegetables such as carrot, parsley, celery and parsnip; Chenopodiaceae vegetables such as spinach and chard; Lamiacea vegetables such as perilla, mint and basil; strawberry; sweet potato; yam; taro; flowers such as petunia, morning glory, carnation, chrysanthemum and rose; foliage plants; turf; fruit trees such as pome fruits (e.g., apple, pear, Japanese pear, Chinese quince and quince), stone fruits (e.g., peach, plum, nectarine, Japanese apricot, cherry, apricot and prune), citrus (e.g., Satsuma orange, orange, lemon, lime and grapefruit), tree nuts (e.g., chestnut, walnut, hazel, almond, pistachio, cashew and macadamia), berries such as blueberry, cranberry, blackberry and raspberry; grapes; persimmon; olive; loquat; banana; coffee; palm; coco; the other trees such tea, mulberry, flower trees, and trees lining a street (e.g., ash, birch, dogwood, eucalyptus, ginkgo, lilac, maple, oak, poplar, Chinese redbud, Formosa sweet gum, sycamore, Japanese zelkova, Japanese thuja, fir, hemlock fir, needle juniper, pine, spruce, yew).

The application can be carried out by spraying a liquid fungicidal composition of the present invention to seeds. Seeds may be coated by a solid fungicidal composition of the present invention. In addition, seeds can be drenched with an aqueous dilution of the fungicidal composition of the present invention. The concentration of tolclofos-methyl in the dilution is generally 0.03% to 3% active ingredient (ai)by weight. The application dosage is generally 2.0 g to 50 g (ai) per 1 kg of seeds.

Further, the fungicidal composition of the present invention may be used for soil application or foliar application.

The application dosage is generally 0.03 g to 14 g per hectare in the amount of tolclofos-methyl, although it may vary with the kinds of objective weeds, weather conditions and so on. The dilution of the fungicidal composition can also be used for aerial application by helicopter, plane or radio-controlled helicopter. The fungicidal composition may be diluted with water containing a spreading agent. Examples of the spreading agent include Agridex (commercial name of Helena Chemical Corporation), Dynamic (commercial name of Helena Chemical Corporation), Induce (commercial name of Helena Chemical Corporation) and Silwet L-77 (manufactured by Nihon Unicar).

Examples of the plant diseases controlled by the present invention include diseases caused by phytopathogenic fungi (in particular of the classes of Ascomycetes, Deuteromycetes, Oomycetes and Basidiomycetes) such as *Magnaporthe grisea, Cochliobolus miyabeanus, Rhizoctonia solani* and *Gibberella fujikuroi* on rice; *Erysiphe graminis, Fusarium graminearum, F. avenacerum, F. culmorum, Microdochium nivale, Puccinia striiformis, P. graminis, P. recondita, P. hordei, Typhula sp., Micronectriella nivalis, Ustilago tritici, U. nuda, Tilletia caries, Pseudocercosporella herpotrichoides, Rhynchosporium secalis, Septoria tritici, Leptosphaeria nodorum* and *Pyrenophora teres* on wheat and barley; *Diaporthe citri, Elsinoe fawcetti, Penicillium digitatum, P. italicum, Phytophthora parasitica* and *Phytophthora citrophthora* on citrus; *Monilinia mali, Valsa ceratosperma, Podosphaera leucotricha, Alternaria alternata* apple pathotype, *Venturia inaequalis, Colletotrichum acutatum* and *Phytophtora cactorum* on apple; *Venturia nashicola, V. pirina, Alternaria alternata* Japanese pear pathotype, *Gymnosporangium haraeanum* and *Phytophtora cactorum* on pear; *Monilinia fructicola, Cladosporium carpophilum* and *Phomopsis sp.* on peach; *Elsinoe ampelina, Glomerella cingulata, Uncinula necator, Phakopsora ampelopsidis, Guignardia bidwellii* and *Plasmopara viticola* on grape; *Gloeosporium kaki, Cercospora kaki* and *Mycosphaerella nawae* on persimmon; *Colletotrichum lagenarium, Sphaerotheca fuliginea, Mycosphaerella melonis, Fusarium oxysporum, Pseudoperonospora cubensis* and *Phytophthora sp.* on Cucurbitales vegetables; *Alternaria solani, Cladosporium fulvum* and *Phytophthora infestans* on tomato; *Phomopsis vexans* and *Erysiphe cichoracearum* on eggplant; *Alternaria japonica, Cercosporella brassicae, Plasmodiophora brassicae* and *Peronospora Parasitica* on Brassicaceae vegetables; *Puccinia allii* and *Peronospora destructor* on leek; *Cercospora kikuchii, Elsinoe glycines, Diaporthe phaseolorum var. sojae, Phakopsora pachyrhizi* and *Phytophthora sojae* on soybean; *Colletotrichum lindemthianum* of kidney bean; *Cercospora personata, Cercospora arachidicola* and *Sclerotium rolfsii* on peanut; *Erysiphe pisi* on pea; *Alternaria solani, Phytophthora infestans, Phytophthora erythroseptica* and *Spongospora subterranean f, sp. subterranean* on potato; *Sphaerotheca humuli* and *Glomerella cingulata* on strawberry; *Exobasidium reticulatum, Elsinoe leucospila, Pestalotiopsis sp.* and *Colletotrichum theae-sinensis* on tea; *Alternaria longipes, Erysiphe cichoracearum, Colletotrichum tabacum, Peronospora tabacina* and *Phytophthora nicotianae* on tobacco; *Cercospora beticola, Thanatephorus cucumeris, Thanatephorus cucumeris* and *Aphanidermatum cochlioides* on sugar beet; *Diplocarpon rosae, Sphaerotheca pannosa* and *Peronospora sparsa* on rose; *Bremia lactucae, Septoria chrysanthemi-indici* and *Puccinia horiana* on chrysanthemum and Compositae vegetables; *Alternaria brassicicola* on radish; *Sclerotinia homeocarpa* and *Rhizoctonia solani* on turf; *Mycosphaerella fijiensis* and *Mycosphaerella musicola* on banana; *Plasmopara halstedii* on sunflower; and various diseases on crops caused by *Pythium spp.* (e.g., *Pythium aphanidermatum, Pythium debarianum, Pythium graminicola, Pythium irregulare, Pythium ultimum), Botrytis cinerea, Sclerotinia sclerotiorum, Aspergillus spp., Penicillium spp., Fusarium spp., Gibberella spp., Tricoderma spp., Thielaviopsis spp., Rhizopus spp., Mucor spp., Corticium spp., Phoma spp., Rhizoctonia spp., Diplodia spp., Polymixa spp.* and *Olpidium spp.*

### Examples

Hereinafter, the present invention is explained in more detail referring to examples.

### Formulation Examples 1-4 and Reference Example

The ingredients described in Table 1 were mixed to obtain each formulation.

**Table 1**

| | | Ex 1 | Ex. 2 | Ex. 3 | Ex. 4 | Ref. Ex. |
|---|---|---|---|---|---|---|
| Active ingredient | Tolclofos-methyl (96.08%) | 43.54 | | | | |
| Celvol 24-203 (24%) | Polyvinyl alcohol, as a 24% solution in water | 6.31 | 6.31 | | | |
| Stepfac TSP PE-K (40%) | Polyoxyethylene tristyrylphenol phosphate | 1.31 | | 1.31 | | |
| Stepfac TSP PE-N | | | 1.31 | | 1.31 | |
| Blended surfactant | Blend of EO/PO block copolymer and polyoxyethylene fatty alcohol (3:1 by weight) | 1.51 | 1.51 | 1.51 | 1.51 | 4 |
| Thickener | Kelzan CC (as a 2.4% solution in water) | 5.00 | | | | |
| Thickener | Van Gel B (as a 4% dispersion in water) | 6.39 | | | | |
| Anti-freezing agent | Propylene Glycol | 5.00 | | | | |
| Anti-foaming agent | Surfynol 104PG (50%) | 0.07 | | | | |
| Preservative | Legend MK | 0.05 | | | | |
| Water | Deionized Water | Balance | | | | |
| Total (w/w) | | 100 | | | | |

| | | | | | | |
|---|---|---|---|---|---|---|
| Celvol 24-203 is a trade name of polyvinyl alcohol produced by Celanese Corp and provided as a 24% solution in water. Stepfac TSP PE-K and Stepfac TSP PE-N are trade names of Polyoxyethylene tristyrylphenol phosphate ester acid salts produced by Stepan Corp. Kelzan CC and Van Gel B are trade names of a thickener produced by Kelco Corp. The materials are normally hydrated in water before added to the formulation. The Kelzan is dissolved in water to make a 2.4% solution. The Van Gel B is mixed into water at high shear for 30 minutes to hydrate the clay, forming the 4% dispersion. Surfynol 104PG is a trade name of an anti-foam agent produced by Air Products Corp, and is supplied as a 50% solution in propylene glycol. Legend MK is a trade name of a preservative produced by Rohm and Haas Company. | | | | | | |

### Test Example

The prepared formulations were stored at 54°C for 2W. After that, the samples were measured by Master sizer 2000, a laser particle analyzer from Malvern Instruments Incorporated. The results are given in the following table.

**Table 2**

| | Volume median diameter (µm) | | | | |
|---|---|---|---|---|---|
| | Ex. 1 | Ex. 2 | Ex. 3 | Ex. 4 | Ref. Ex. |
| Initial | 2.1 | 2.0 | 2.2 | 2.1 | 2.2 |
| After 2w at 54°C | 10.7 | 9.6 | 9.8 | 8.3 | 20.2 |

The results show that agglomeration of solid particles is slow in the formulations of the present invention, and thus, the formulation of the present invention has good stability of the formulation at high temperature such as 54°C.

## Claims

1. A fungicidal composition comprising tolclofos-methyl, polyoxyethylene polyarylphenol phosphate, polyoxyethylene polyoxypropylene block copolymer, polyoxyethylene fatty alcohol ether and water.

2. The fungicidal composition according to claim 1, which comprises 30% to 70% by weight of tolclofos-methyl, 0.3% to 5% by weight of polyoxyethylene polyarylphenol phosphate, 0.5% to 5% by weight of polyoxyethylene polyoxypropylene block copolymer, 0.1 % to 3% by weight of polyoxyethylene fatty alcohol ether and 25% to 65% by weight of water.

3. The fungicidal composition according to claim 1, which comprises 40% to 55% by weight of tolclofos-methyl, 1 % to 5% by weight of polyoxyethylene polyarylphenol phosphate, 1 % to 3% by weight of polyoxyethylene polyoxypropylene block copolymer, 0.3% to 1.5% by weight of polyoxyethylene fatty alcohol ether and 35% to 65% by weight of water.

4. The fungicidal composition according to claim 1, which comprises tolclofos-methyl, polyoxyethylene polyarylphenol phosphate, polyoxyethylene polyoxypropylene block copolymer, polyoxyethylene fatty alcohol ether, polyvinyl alcohol and water.

5. The, fungicidal composition according to claim 4, which comprises 40% to 55% by weight of tolclofos-methyl, 1% to 5% by weight of polyoxyethylene polyarylphenol phosphate, 1 % to 3% by weight of polyoxyethylene polyoxypropylene block copolymer, 0.3% to 1.5% by weight of polyoxyethylene fatty alcohol ether, 0.5% to 3% by weight of polyvinyl alcohol and 35% to 65% by weight of water.

6. The fungicidal composition according to claim 1, 2 or 3, wherein the polyoxyethylene polyarylphenol phosphate is polyoxyethylene tristyryl phenol phosphate.

## Patentansprüche

1. Eine fungizide Zusammensetzung, umfassend Tolclofos-Methyl, Polyoxyethylenpolyarylphenolphosphat, Polyoxyethylenpolyoxypropylen-Blockcopolymer, Polyoxyethylenfettalkoholether und Wasser.

2. Die fungizide Zusammensetzung nach Anspruch 1, welche 30 bis 70 Gew.-% Tolclofos-Methyl, 0,3 bis 5 Gew.-% Polyoxyethylenpolyarylphenolphosphat, 0,5 bis 5 Gew.-% Polyoxyethylenpolyoxypropylen-Blockcopolymer, 0,1 bis 3 Gew.-% Polyoxyethylenfettalkoholether und 25 bis 65 Gew.% Wasser umfasst.

3. Die fungizide Zusammensetzung nach Anspruch 1, welche 40 bis 55 Gew.-% Tolclofos-Methyl, 1 bis 5 Gew.-% Polyoxyethylenpolyarylphenolphosphat, 1 bis 3 Gew.-% Polyoxyethylenpolyoxypropylen-Blockcopolymer, 0,3 bis 1,5 Gew.-% Polyoxyethylenfettalkoholether und 35 bis 65 Gew.-% Wasser umfasst.

4. Die fungizide Zusammensetzung nach Anspruch 1, welche Tolclofos-Methyl, Polyoxyethylenpolyarylphenolphosphat, Polyoxyethylenpolyoxypropylen-Blockcopolymer, Polyoxyethylenfettalkoholether, Polyvinylalkohol und Wasser umfasst.

5. Die fungizide Zusammensetzung nach Anspruch 4, welche 40 bis 55 Gew.-% Tolclofos-Methyl, 1 bis 5 Gew.-% Polyoxyethylenpolyarylphenolphosphat, 1 bis 3 Gew.-% Polyoxyethylenpolyoxypropylen-Blockcopolymer, 0,3 bis 1,5 Gew.-% Polyoxyethylenfettalkoholether, 0,5 bis 3 Gew.-% Polyvinylalkohol und 35 bis 65 Gew.-% Wasser umfasst.

6. Die fungizide Zusammensetzung nach Anspruch 1, 2 oder 3, wobei das Polyoxyethylenpolyarylphenolphosphat Polyoxyethylentristyrylphenolphosphat ist.

## Revendications

1. Composition fongicide comprenant du tolclofos-méthyle, du phosphate de polyoxyéthylène polyarylphénol, un copolymère séquencé de polyoxyéthylène polyoxypropylène, un éther d'alcool gras de polyoxyéthylène et de l'eau.

2. Composition fongicide selon la revendication 1, laquelle comprend de 30 % à 70 % en masse de tolclofos-méthyle, de 0,3 % à 5 % en masse de phosphate de polyoxyéthylène polyarylphénol, de 0,5 % à 5 % en masse de copolymère séquencé de polyoxyéthylène polyoxypropylène, de 0,1 % à 3 % en masse d'éther d'alcool gras de polyoxyéthylène et de 25 % à 65 % en masse d'eau.

3. Composition fongicide selon la revendication 1, laquelle comprend de 40 % à 55 % en masse de tolclofos-méthyle, de 1 % à 5 % en masse de phosphate de polyoxyéthylène polyarylphénol, de 1 % à 3 % en masse de copolymère séquencé de polyoxyéthylène polyoxypropylène, de 0,3 % à 1,5 % en masse d'éther d'alcool gras de polyoxyéthylène et de 35 % à 65 % en masse d'eau.

4. Composition fongicide selon la revendication 1, laquelle comprend du tolclofos-méthyle, du phosphate de polyoxyéthylène polyarylphénol, un copolymère séquencé de polyoxyéthylène polyoxypropylène, un éther d'alcool gras de polyoxyéthylène, du poly(alcool vinylique) et de l'eau.

5. Composition fongicide selon la revendication 4, laquelle comprend de 40 % à 55 % en masse de tolclofos-méthyle, de 1 % à 5 % en masse de phosphate de polyoxyéthylène polyarylphénol, de 1 % à 3 % en masse de copolymère séquencé de polyoxyéthylène polyoxypropylène, de 0,3 % à 1,5 % en masse d'éther d'alcool gras de polyoxyéthylène, de 0,5 % à 3 % en masse de poly(alcool vinylique) et de 35 % à 65 % en masse d'eau.

6. Composition fongicide selon la revendication 1, 2 ou 3, dans laquelle le phosphate de polyoxyéthylène polyarylphénol est le phosphate de polyoxyéthylène tristyrylphénol.
